(19) Europäisches Patentamt / European Patent Office / Office européen des brevets

(11) **EP 4 250 393 B1**

(12) **EUROPEAN PATENT SPECIFICATION**

(45) Date of publication and mention
of the grant of the patent:
**19.03.2025 Bulletin 2025/12**

(21) Application number: **22896011.8**

(22) Date of filing: **15.11.2022**

(51) International Patent Classification (IPC):
*H01M 4/134* (2010.01)    *H01M 4/62* (2006.01)
*H01M 4/66* (2006.01)    *H01M 4/1395* (2010.01)
*H01M 4/04* (2006.01)    *H01M 10/052* (2010.01)
*H01M 4/38* (2006.01)    *H01M 4/02* (2006.01)
*H01M 4/36* (2006.01)

(52) Cooperative Patent Classification (CPC):
H01M 4/0435; H01M 4/0485; H01M 4/134;
H01M 4/1395; H01M 4/364; H01M 4/382;
H01M 4/62; H01M 4/628; H01M 4/661;
H01M 10/052; H01M 2004/027; Y02E 60/10

(86) International application number:
**PCT/KR2022/017954**

(87) International publication number:
**WO 2023/090805 (25.05.2023 Gazette 2023/21)**

(54) **NEGATIVE ELECTRODE FOR LITHIUM SECONDARY BATTERY AND LITHIUM SECONDARY BATTERY COMPRISING SAME**

NEGATIVELEKTRODE FÜR LITHIUMSEKUNDÄRBATTERIE UND LITHIUMSEKUNDÄRBATTERIE DAMIT

ÉLECTRODE NÉGATIVE POUR BATTERIE SECONDAIRE AU LITHIUM ET BATTERIE SECONDAIRE AU LITHIUM LA COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.11.2021 KR 20210160928**

(43) Date of publication of application:
**27.09.2023 Bulletin 2023/39**

(73) Proprietor: **LG Energy Solution, Ltd.**
**Seoul 07335 (KR)**

(72) Inventors:
• **KIM, Myeongseong**
**Daejeon 34122 (KR)**
• **KIM, Kihyun**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
WO-A1-2021/172879    WO-A1-2021/172879
JP-A- H0 684 512    KR-A- 20170 011 357
KR-A- 20190 017 651    KR-A- 20190 017 651
KR-A- 20200 081 305    KR-A- 20200 081 305
KR-A- 20200 132 491    US-A1- 2022 416 221
US-B2- 11 316 145

**Description**

[Technical Field]

The application claims the benefit of priority based on Korean Patent Application No. 2021-0160928 filed on November 22, 2021.

The present disclosure relates to a negative electrode for a lithium secondary battery and a lithium secondary battery comprising the same.

[Background]

Since a lithium secondary battery that uses Li-metal as a negative electrode active material can express high theoretical capacity (3860 mAh/g) and low standard reduction potential (-3.040 V vs. SHE), it is in the limelight as a next-generation battery that can replace a lithium-ion battery that uses carbon-based negative electrode active materials such as graphite.

However, due to the high reactivity of Li-metal, the fact that it has low coulombic efficiency, short lifetime, and low safety compared to lithium-ion batteries is a factor delaying the commercialization of the Li-metal battery.

Specifically, during operation of a lithium secondary battery using Li-metal as a negative electrode active material, lithium dendrite and dead lithium can be generated on the surface of the Li-metal negative electrode. These materials can form a passivation layer (solid electrolyte interphase, SEI) on the surface of the Li-metal negative electrode, and a process by which these materials are easily broken and formed can be repeated.

Accordingly, the negative electrode active material that can participate in the electrochemical reaction is gradually lost, thereby reducing the coulombic efficiency and shortening the lifetime of the Li-metal battery.

Moreover, lithium dendrite grown from the surface of the Li-metal negative electrode penetrates the separator and reaches the positive electrode, and thus can cause internal short circuit of Li-metal battery, which is directly related to safety issues such as fire and explosion.

Therefore, in order to secure the lifetime and safety of the battery by suppressing the growth of dendrites on the surface of the Li-metal negative electrode, there have been developed various technologies for the lithium negative electrode with a protective layer formed on the surface.

Korean Laid-open Patent Publication No. 2020-0132491 discloses a Li-metal negative electrode treated with lithium nitrate ($LiNO_3$), wherein the Li-metal negative electrode comprises a surface protective layer having an increased amount of lithium oxide on the surface of the Li-metal membrane by a chemical reaction between the surface of the Li-metal membrane and lithium nitrate. However, if lithium nitrate is comprised in the electrolyte, the lithium nitrate is rapidly decomposed on the surface of the Li-metal negative electrode during the charging/discharging process of the battery to form a solid electrolyte interphase (SEI). If such a phenomenon is continued, the content of lithium nitrate in the electrolyte is lowered eventually to a certain level, and thus there may be a problem that the lifetime of the battery is rapidly degraded.

Therefore, there is a demand for the development of technology that can improve the lifetime performance of the lithium secondary battery by preventing the rapid decrease in the content of lithium nitrate in the electrolyte even if the battery is repeatedly charged/discharged.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

[Disclosure]

[Technical Problem]

The inventors of the present disclosure have confirmed that the lifetime characteristics of a lithium secondary battery can be improved by adding $LiNO_3$ to the lithium foil used as the negative electrode for the lithium secondary battery, but causing $LiNO_3$ to be uniformly comprised in the inside and surface of the lithium foil.

Accordingly, it is an object of the present disclosure to provide a negative electrode for a lithium secondary battery and a method for manufacturing the same, which can improve the lifetime characteristics of the battery.

It is another object of the present disclosure to provide a lithium secondary battery comprising a negative electrode for a lithium secondary battery having excellent discharging capacity and lifetime characteristics.

[Technical Solution]

In order to achieve the above objects, the present disclosure provides a negative electrode for a lithium secondary battery, including a lithium substrate and a lithium compound formed on a surface and inside of the lithium substrate.

The lithium compound may include one or more selected from the group consisting of $LiNO_3$, LiF, LiCl, $Li_2S$, $Li_2CO_3$ and $Li_2O$.

The lithium compound may be comprised in an amount exceeding 0% by weight and 30% by weight or less based on the total weight of the lithium substrate.

The lithium substrate may be a lithium foil.

The lithium substrate may have a thickness of 5 to 500 $\mu$m.

The present disclosure also provides a method for manufacturing a negative electrode for a lithium secondary battery, comprising the steps of: (S1) preparing a lithium ingot by adding a lithium compound to molten lithium; and (S2) rolling the lithium ingot to produce a lithium substrate containing the lithium compound formed on its surface and inside.

The lithium compound of the step (S1) may have a powder form.

The present disclosure also provides a lithium secondary battery comprising: a positive electrode, the negative electrode for the lithium secondary battery as described above, a separator, and an electrolyte solution.

The positive electrode may contain sulfur.

The lithium secondary battery may be a lithium-sulfur secondary battery.

[Advantageous Effects]

According to the present disclosure, it is possible to improve the life characteristics of a lithium secondary battery by using a lithium substrate containing a lithium compound formed on its inside and surface as a negative electrode of a lithium secondary battery.

[Brief Description of Drawings]

FIG. 1 is a scanning electron microscope (SEM) photograph of lithium foil containing $LiNO_3$ prepared in Example 1.

FIG. 2 shows the results of energy dispersive X-ray spectroscopy (EDS) of lithium foil containing $LiNO_3$ prepared in Example 1.

FIG. 3 is a graph showing the results of measuring the lifetime performance of the lithium-lithium batteries manufactured using the lithium foils in Example 1 and Comparative Example 1, respectively.

FIG. 4 is a graph showing the results of measuring the lifetime performance of the lithium-sulfur secondary batteries manufactured using the lithium foils in Example 1, Comparative Example 1, and Comparative Example 2, respectively.

[Detailed Description]

Hereinafter, the present disclosure will be described in more detail to assist understanding of the present disclosure.

The terms and words used in the present specification and claims should not be construed as limited to ordinary or dictionary terms, and should be construed in a sense and concept consistent with the technical idea of the present disclosure, based on the principle that the inventor can properly define the concept of a term to describe his invention in the best way possible.

**Negative electrode for lithium secondary battery**

The present disclosure relates to a negative electrode for a lithium secondary battery. The negative electrode for the lithium secondary battery comprises a lithium substrate and a lithium compound formed on the surface and inside of the lithium substrate.

According to one embodiment of the present disclosure, the negative electrode for the lithium secondary battery may be a lithium foil containing lithium nitrate ($LiNO_3$) on its surface and inside.

In the present disclosure, since the lithium compound is uniformly present on the surface and inside of the lithium substrate, as the charging/discharging of the battery is repeated, the lithium compound is not rapidly decomposed but slowly eluted, so that lifetime characteristics can be improved.

In addition, the lithium compound may be a material that can help uniform growth of lithium when a solid electrolyte interphase (SEI) is formed by reacting with the lithium substrate. For example, the lithium compound may include at least one selected from the group consisting of $LiNO_3$, LiF, LiCl, $Li_2S$, $Li_2CO_3$ and $Li_2O$, and the lithium

compound may be $LiNO_3$ in consideration of an effect of improving lifetime characteristics of a battery.

In the present disclosure, the lithium compound may be comprised in an amount exceeding 0% by weight and 30% by weight or less based on the total weight of the lithium substrate, and specifically, the content of the lithium compound may exceed 0% by weight, 0.5% by weight or more, 1% by weight or more, or 1.5% by weight or more, and 5% by weight or less, 10% by weight or less, 20% by weight or less, or 30% by weight or less. If the content of the lithium compound is 0% by weight, the effect of improving the lifetime characteristics of the lithium secondary battery may be insignificant. If the content of the lithium compound exceeds 30% by weight, the resistance of the battery is increased and the overvoltage may occur, thereby deteriorating the lifetime characteristics of the battery.

In the present disclosure, the lithium compound may have a form that is uniformly included in the inside and on the surface of the lithium substrate.

The lithium compound may be included in the inside and on the surface of the lithium substrate in the form of a powder. In addition, in the manufacturing process of the negative electrode for the lithium secondary battery, the lithium compound may be uniformly formed and comprised in the inside and on the surface of the lithium substrate, due to the process of melting lithium and then adding and dispersing the lithium compound.

If the lithium compound is formed only on the surface of the lithium foil, it is easily decomposed by the electrolyte during operation of the battery, and the lifetime characteristics of the battery may be deteriorated.

In addition, if the lithium compound is comprised only in the inside of the lithium foil, the overvoltage is increased and the initial deterioration is accelerated, and thus eventually, there may be a problem that the lifetime characteristics of the battery are deteriorated.

In the present disclosure, the lithium substrate may have a thickness of 5 to 500 $\mu$m, and specifically, the lithium substrate may have a thickness of 5 $\mu$m or more, 10 $\mu$m or more, 30 $\mu$m or more, or 50 $\mu$m or more, and 100 $\mu$m or less, 300 $\mu$m or less, or 500 $\mu$m or less. If the lithium substrate is excessively thin, the performance and lifetime characteristics of the battery may be deteriorated. If the lithium substrate is excessively thick, there may be a problem that the product becomes thick.

In the present disclosure, the lithium substrate may also be used by being laminated on the negative electrode current collector.

The negative electrode current collector is not particularly limited as long as it has electrical conductivity without causing a chemical change in the relevant battery. For example, copper, stainless steel, nickel, titanium, sintered carbon, copper or stainless steel surface-treated with carbon, nickel, titanium, silver or the like; aluminum-cadmium alloy or the like may be used as the negative electrode current collector. The negative electrode current collector can be various forms such as a film having fine irregularities on its surface, sheet, foil, net, porous body, foam, nonwoven fabric and the like.

**Manufacturing method of negative electrode for lithium secondary battery**

The present disclosure also relates to a method for manufacturing a negative electrode for a lithium secondary battery. The manufacturing method of the negative electrode for the lithium secondary battery comprises the steps of (S1) manufacturing a lithium ingot by adding a lithium compound to molten lithium; and (S2) rolling the lithium ingot to manufacture a lithium substrate containing the lithium compound formed on its surface and in its inside.

Hereinafter, the method for manufacturing the negative electrode for the lithium secondary battery according to the present disclosure will be described in detail for each step.

In the present disclosure, in step (S1), a lithium ingot may be manufactured by adding a lithium compound to molten lithium.

The molten lithium may be prepared by heating lithium at 300°C to 600°C. Specifically, the heating temperature may be 300 °C or higher, 350 °C or higher, or 400 °C or higher, and 500 °C or lower, 550 °C or lower, or 600 °C or lower. If the heating temperature is less than 300 °C, lithium may not be sufficiently melted, and if the heating temperature exceeds 600 °C, lithium may be denatured.

The lithium compound may be in the form of a powder of the lithium compound. The powder of the lithium compound may have a size of 500 nm to 10 $\mu$m in consideration of uniform dispersibility when added to the molten lithium. In this case, the size may be the length of the longest axis of the powder.

In the present disclosure, in step (S2), a lithium foil containing a lithium compound may be manufactured by rolling the lithium ingot.

The pressure during the rolling is not particularly limited as long as it can form the shape of a substrate such as a foil, and the rolling process may be performed by a known extrusion and/or rolling process. For example, the rolling process may be performed using a rotating roll or flat plate press.

In the present disclosure, when a negative electrode current collector is used, a step of stacking the lithium foil on the negative electrode current collector after step (S2) may be further comprised.

In addition, the negative electrode current collector is not particularly limited as long as it has electrical conductivity without causing a chemical change in the relevant battery. For example, copper, stainless steel, nickel, titanium, sintered carbon, copper or stainless steel surface-treated with carbon, nickel, silver or the like; aluminum-cadmium alloy or the like may be used as the negative electrode current collector. Also, as with the positive electrode current collector, the negative electrode current collector can be various forms such as a film having fine irregularities on its surface, sheet, foil, net, porous body, foam, nonwoven fabric and the like.

**Lithium secondary battery**

The present disclosure also relates to a lithium secondary battery including a positive electrode, a negative electrode, a separator, and an electrolyte solution.

Negative electrode

In the lithium secondary battery according to the present disclosure, the negative electrode is the same as the negative electrode for the lithium secondary battery as described above.

Positive electrode

In the lithium secondary battery according to the present disclosure, the positive electrode may comprise a positive electrode current collector; and a positive electrode active material layer formed on the positive electrode current collector.

The positive electrode active material layer may comprise a positive electrode active material, a binder, and an electrically conductive material.

The positive electrode active material may comprise elemental sulfur ($S_8$), a sulfur-based compound, or a mixture thereof, and the sulfur-based compound may specifically be $Li_2Sn$ (n=1), an organic sulfur compound or a sulfur-carbon composite (($C_2S_x$)$_n$: x=2.5 to 50, n=2). In addition, among the positive electrode active materials, the sulfur-carbon composite reduces the outflow of sulfur into the electrolyte, and is a mixture of a carbon material and sulfur to increase the electrical conductivity of an electrode containing sulfur.

The sulfur-carbon composite may include sulfur and a carbon material, and specifically, may include the sulfur and the carbon material in a weight ratio of 55 to 90 : 45 to 10. If the weight ratio of sulfur and carbon material contained in the sulfur-carbon composite is satisfied, the capacity of the battery can be improved while the conductivity can be maintained.

In addition, the sulfur-carbon composite may be contained in an amount of 60 to 95% by weight based on the total weight of the positive electrode active material layer, and specifically, may be contained in an amount of 60% by weight or more, 70% by weight or more, or 80% by weight or more, or may be contained in an amount of 93% by weight or less, 94% by weight or less, or 95% by weight or less. If the content is less than the above range, the performance of the battery may be deteriorated. If the content exceeds the above range, the content of the binder and/or metal oxide-based additive other than the positive electrode active material is relatively reduced, and thus the durability may be reduced or the effect of improving the capacity of the positive electrode or the lifetime characteristics of the battery may be insignificant.

In addition, in the sulfur-carbon composite, the sulfur may be selected from the group consisting of elemental sulfur ($S_8$), a sulfur-based compound, or a sulfur-carbon composite. The sulfur-based compound may specifically be $Li_2Sn$ (n=1), an organic sulfur compound, or a carbon-sulfur polymer (($C_2S_x$)$_n$: x=2.5 to 50, n=2).

In addition, in the sulfur-carbon composite, the carbon material may be a porous carbon material, and may generally be prepared by carbonizing precursors of various carbon materials.

The porous carbon material may comprise uneven pores therein, the average diameter of the pores may be in the range of 1 to 200 nm, and specifically may be 1 nm or more, 5 nm or more, or 10 nm or more, and may be 100 nm or less, 150 nm or less, or 200 nm or less. In addition, the porosity of the porous carbon material may be in the range of 10 to 90% of the total volume of the porous carbon, and specifically may be 10% or more, 15% or more, or 20% or more, and may be 70% or less, 80% or less, or 90% or less. If the average diameter and porosity of the pores are less than the above range, the pore size is only at the molecular level and impregnation with sulfur is impossible. On the contrary, if the average diameter and porosity of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and activated carbon. Preferably, the porous carbon material may be graphite.

In addition, the binder may be styrene-butadiene rubber (SBR)/carboxymethyl cellulose (CMC), poly(vinyl acetate), polyvinyl alcohol, polyethylene oxide, polyvinyl pyrrolidone, alkylated polyethylene oxide, crosslinked polyethylene oxide, polyvinyl ether, poly(methyl methacrylate), polyvinylidene fluoride, copolymer (product name: Kynar) of polyhexafluoropropylene and polyvinylidene fluoride, poly(ethyl acrylate), polytetrafluoroethylene, polyvinylchloride, polyacrylonitrile, polyvinylpyridine, polystyrene, polyacrylic acid, and derivatives thereof, blends thereof, and copolymers thereof.

In addition, the content of the binder may be 1 to 20% by weight, preferably 3 to 18% by weight, and more preferably 5 to 15% by weight based on the total weight of the positive electrode active material layer. If the content of the binder is in the above range, the binding force between the positive electrode active materials or between the positive electrode active material and the current collector is greatly improved, and the problem that capacity characteristic is deteriorated can also be prevented. In addition, it can be expected to inhibit the leaching of polysulfide by the interaction between polysulfide and a specific functional group in the polymer chain used as a binder. If the content of the binder exceeds the above range, the capacity of the battery may be lowered.

In addition, the electrically conductive material may be included to secure a movement path of lithium ions of the positive electrode.

The electrically conductive material may be at least one selected from the group consisting of carbon blacks selected from Super P, Denka black, acetylene black, Ketjen black, channel black, furnace black, lamp black, and thermal black; carbon derivatives selected from carbon nanotubes and fullerene; electrically conductive fibers selected from carbon fiber and metal fiber; metal powders selected from carbon fluoride, aluminum and nickel powder; and electrically conductive polymers selected from polyaniline, polythiophene, polyacetylene, and polyphenol.

The electrically conductive material may be contained in an amount of 1 to 20% by weight based on the total weight of the positive electrode active material layer, and specifically, the content of the electrically conductive material may be 1% by weight or more, 3% by weight or more, or 5% by weight or more, and may be 15% by weight or less, 18% by weight or less, or 20% by weight or less. If the content of the electrically conductive material is less than the above range, it is difficult to form and maintain a conductive structure and a path for moving lithium ions throughout the positive electrode active material layer, so that the effect of increasing the discharging capacity of the battery and improving the overvoltage may be insignificant. If the content of the electrically conductive material exceeds the above range, the lifetime of the battery may rather be reduced.

As described above, the positive electrode may be prepared by mixing a positive electrode active material, a binder, and an electrically conductive material in a solvent to prepare a slurry for the positive electrode, and then coating and drying the slurry for the positive electrode on a positive electrode current collector.

The solvent used in preparing the slurry for the positive electrode may be at least one selected from the group consisting of water (distilled water), methanol, ethanol, isopropyl alcohol, acetone, dimethyl sulfoxide, formamide, dimethylformamide, dioxolane, acetonitrile, nitromethane, acetic acid, methyl formate, methyl acetate, phosphoric acid triesters, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate and ethyl propionate, and in particular, if water (distilled water) or anhydrous alcohol-based solvent is used, it is desirable because it can prevent the damage of the positive electrode active material.

The concentration of the slurry for the positive electrode is not particularly limited as long as it is such that the coating process can be performed smoothly.

Separator

In the present disclosure, the separator may be formed of a porous substrate, and the porous substrate may be any porous substrate conventionally used in an electrochemical device. For example, a polyolefin-based porous membrane or a nonwoven fabric may be used as the porous substrate, but it is not particularly limited thereto.

Examples of the polyolefin-based porous membrane may comprise a membrane formed of olefin-based polymer, such as polyethylene such as high-density polyethylene, linear low-density polyethylene, low density polyethylene and ultra-high molecular weight polyethylene, polypropylene, polybutylene, and polypentene, alone or a mixture thereof.

The nonwoven fabric may comprise, in addition to the polyolefin-based nonwoven fabric, for example, a nonwoven fabric formed of polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, and polyethylenenaphthalate alone or a mixture thereof. The structure of the nonwoven fabric may be a spun bond nonwoven fabric or a melt blown nonwoven fabric composed of long fibers.

The thickness of the porous substrate is not particularly limited, but may be 1 $\mu$m to 100 $\mu$m, or 5 $\mu$m to 50 $\mu$m.

The size and porosity of the pores present in the porous substrate are also not particularly limited, but may be

0.001 $\mu$m to 50 $\mu$m and 10% to 95%, respectively.

Electrolyte solution

In the present disclosure, the electrolyte solution may be a nonaqueous electrolyte solution, and the electrolyte salt contained in the nonaqueous electrolyte solution is a lithium salt. The lithium salt is not particularly limited as long as it can be conventionally used in electrolyte solution for a lithium secondary battery. For example, the lithium salt may be at least one selected from the group consisting of LiFSI, LiPF$_6$, LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiAsF$_6$, LiSbF$_6$, LiPF$_6$, LiAlCl$_4$, CH$_3$SO$_3$Li, CF$_3$SO$_3$Li, (CF$_3$SO$_2$)$_2$NLi, lithium chloroborane, and 4-phenyl lithium borate.

As the organic solvent contained in the nonaqueous electrolyte solution, those conventionally used in an electrolyte solution for a lithium secondary battery may be used without limitation, and for example, ether, ester, amide, linear carbonate, cyclic carbonate, etc. may be used alone or in combination of two or more thereof. Among them, representatively, carbonate compounds that are cyclic carbonates, linear carbonates, or slurries thereof may be comprised.

Specific examples of the cyclic carbonate compound may comprise at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a slurry of two or more thereof. Examples of such halides comprise, but are not limited to, fluoroethylene carbonate (FEC) and the like.

In addition, specific examples of the linear carbonate compound may representatively comprise, but is not limited to, at least one selected from the group consisting of dimethyl carbonate (DMC), diethyl carbonate (DEC), dipropyl carbonate, ethylmethyl carbonate (EMC), methylpropyl carbonate, and ethylpropyl carbonate, or a slurry of two or more thereof. Particularly, among the carbonate-based organic solvents, ethylene carbonate and propylene carbonate which are cyclic carbonates are highly viscous organic solvents and have a high dielectric constant, and thus can dissociate lithium salts in the electrolyte much better. When these cyclic carbonates are mixed with linear carbonates having a low viscosity and a low dielectric constant, such as dimethyl carbonate and diethyl carbonate, at a suitable ratio, an electrolyte solution having the higher electrical conductivity can be prepared.

In addition, the ether among the above organic solvents may be, but is not limited to, any one selected from the group consisting of dimethyl ether, diethyl ether, dipropyl ether, methylethyl ether, methylpropyl ether and ethylpropyl ether, or a slurry of two or more thereof.

In addition, the ester among the above organic solvents may be, but is not limited to, any one selected from the group consisting of methyl acetate, ethyl acetate, propyl acetate, methyl propionate, ethyl propionate, propyl propionate, $\gamma$-butyrolactone, $\gamma$-valerolactone, $\gamma$-caprolactone, $\sigma$-valerolactone and $\varepsilon$-caprolactone, or a slurry of two or more thereof.

The injection of the non-aqueous electrolyte solution can be performed at an appropriate stage during the manufacturing process of the electrochemical device, depending on the manufacturing process and required physical properties of the final product. That is, such injection can be carried out before assembling the electrochemical device or in the final stage of assembling the electrochemical device.

In the case of the lithium secondary battery according to the present disclosure, it is possible to perform laminating or stacking and folding processes of the separator and the electrode, in addition to the winding process which is a general process.

In addition, the shape of the battery case is not particularly limited, and may be of various shapes such as a cylindrical shape, a laminate shape, a square shape, a pouch shape, or a coin shape. The structure and manufacturing method of these batteries are widely known in the art, and thus detailed description thereof will be omitted.

In addition, the lithium secondary battery may be classified into various batteries, such as a lithium-sulfur secondary battery, a lithium-air battery, a lithium-oxide battery, and a lithium all-solid battery, depending on the positive electrode/negative electrode material used.

In addition, the present disclosure provides a battery module comprising the lithium secondary battery as a unit cell.

The battery module may be used as a power source of medium- or large-sized devices requiring high temperature stability, long cycle characteristics, and high-capacity characteristics.

Examples of the medium or large-sized devices may comprise, but are not limited to, a power tool that is powered and moved by an electric motor; electric cars including an electric vehicle (EV), a hybrid electric vehicle (HEV), a plug-in hybrid electric vehicle (PHEV), and the like; an electric motorcycle including an electric bike (E-bike) and an electric scooter (E-scooter); an electric golf cart; and a power storage system.

Hereinafter, preferred examples are presented to aid understanding of the present disclosure, but the following examples are only illustrative of the present disclosure, and it will be apparent to those skilled in the art that various changes and modifications can be made within the scope and spirit of the present disclosure, and also it is natural that such variations and modifications are within the scope of the appended claims.

**Example 1: Manufacture of negative electrode for lithium-sulfur secondary battery and lithium-sulfur secondary battery**

**(1) Manufacture of negative electrode**

Lithium was heated to 500°C to produce molten lithium. After adding $LiNO_3$ powder to the molten lithium, mixture was stirred while maintaining 500°C. Thereafter, the stirred melt was cooled to prepare a lithium ingot containing $LiNO_3$.

A negative electrode in the form of a lithium foil was manufactured by extruding and rolling the lithium ingot containing the $LiNO_3$. In the prepared negative electrode, lithium foil was set to be 98% by weight and $LiNO_3$ was set to be 2% by weight.

**(2) Manufacture of lithium-sulfur secondary battery**

(2-1) Positive electrode

Sulfur and carbon nanotubes, which are carbon materials, were mixed in a weight ratio of 70: 30, and then heat-treated at 155 °C for 30 minutes to prepare a sulfur-carbon composite.

90% by weight of the sulfur-carbon composite, 5% by weight of Denka black as an electrically conductive material, and 5% by weight of styrene-butadiene rubber/carboxymethyl cellulose (SBR: CMC=7: 3(w/w)) as binder were mixed and dissolved in water to prepare a slurry for a positive electrode having a concentration (concentration 20% based on solid content).

The positive electrode slurry was applied on an aluminum current collector, dried at 50°C for 12 hours, and then compressed with a roll press to form a positive electrode active material layer, thereby manufacturing a positive electrode. The loading of the prepared positive electrode was 5.4 mAh/cm$^2$ and the porosity was 68%.

(2-2) Electrolyte solution

A mixed solution obtained by dissolving 1M lithium bis(trifluoromethanesulfonyl)imide (LiTFSI) and 1% by weight of lithium nitrate ($LiNO_3$) in an organic solvent consisting of 1,3-dioxolane and dimethyl ether (DOL: DME=1: 1 (volume ratio)) was used as the electrolyte solution.

(2-3) Manufacture of lithium-sulfur secondary battery

After stacking the negative electrode, the separator, and the positive electrode, 0.1 ml of an electrolyte solution was injected to prepare a lithium-sulfur secondary battery. As a separator, a polyethylene-porous film (thickness: 20 $\mu$m, porosity 68%) was used.

**Comparative Example 1**

A lithium-sulfur secondary battery was manufactured in the same way as in Example 1, except that as a negative electrode, lithium foil that does not contain $LiNO_3$ is used.

**Comparative Example 2**

A lithium-sulfur secondary battery was manufactured in the same way as in Example 1, except that a negative electrode is produced by applying $LiNO_3$ on the surface of lithium foil to form a coating layer.

**Experimental Example 1: Shape and component analysis of lithium foil**

The shapes of the lithium foil containing $LiNO_3$ in Example 1 and the lithium foil in Comparative Example 1 were observed, and their components were analyzed.

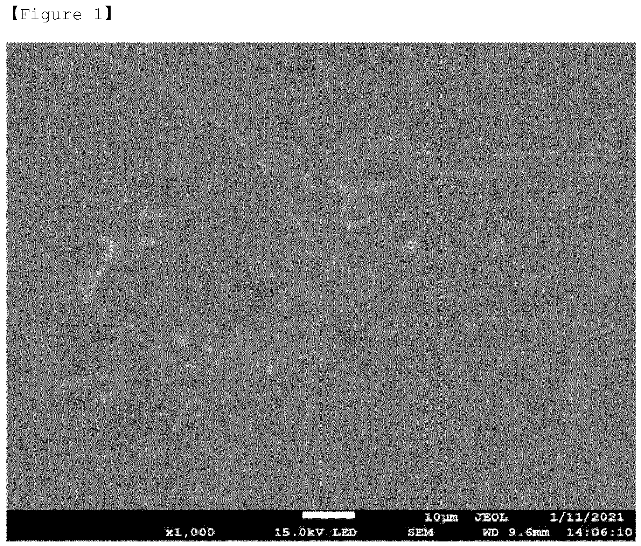

FIG. 1 is a scanning electron microscope (SEM) photograph of lithium foil containing $LiNO_3$ prepared in Example 1. The SEM photograph was taken using SEM equipment (JEOL, JSM-7610F).

Referring to FIG. 1, it can be seen that the lithium foil containing the $LiNO_3$ has a surface shape similar to that of a general lithium foil not containing $LiNO_3$.

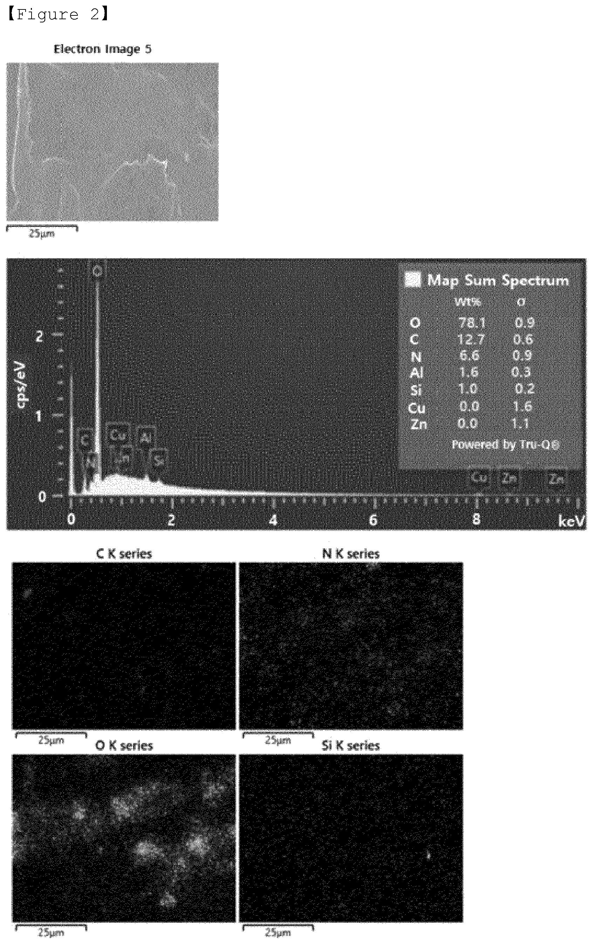

FIG. 2 shows the results of energy dispersive X-ray spectroscopy (EDS) of lithium foil containing $LiNO_3$ prepared

in Example 1. The EDS equipment is attached to the SEM, and an SEM equipment (JEOL, JSM-7610F) was also used as an equipment capable of component analysis, which is an optional function of the SEM.

Referring to FIG. 2, it can be seen that as a result of EDS for the lithium foil containing $LiNO_3$ in Example 1, N was detected. In addition, it can be confirmed that carbon (C), oxygen (O), and silicon (Si) are distributed on the surface of the negative electrode prepared in Example 1. However, carbon (C), oxygen (O), and silicon (Si) are components that are also observed on the existing lithium surface.

Accordingly, it can be seen that since $LiNO_3$ is distributed on the surface of the negative electrode prepared as in Example 1, nitrogen (N) is distributed on the surface of lithium in the form of $LiNO_3$.

Table 1 below shows the results of Inductively Coupled Plasma (ICP) analysis of the lithium foils prepared in Example 1 and Comparative Example 1, respectively. It was analyzed using an ICP analyzer (Perkin Elmer, OPTIMA 7300DV).

Table 1:

| Unit: ppm | Al | Ca | Fe | K | Na | Si | N |
|---|---|---|---|---|---|---|---|
| Comparative Example 1 | 15 | 32 | 5 | 6 | 66 | 5 | 17 |
| Example 1 | 3 | 36 | 5 | 8 | 61 | 4 | 3,846 |

As shown in Table 1 above, it can be seen that a large amount of N was detected in the lithium foil containing $LiNO_3$ prepared in Example 1.

**Experimental Example 2: Evaluation of lifetime performance**

**2-1. Evaluation of lifetime performance in lithium-lithium battery**

A lithium-lithium battery was prepared in which the lithium foil containing $LiNO_3$ of Example 1 was arranged as a negative electrode and a positive electrode. The electrolyte solution and the separator were the same as in Example 1.

For the lithium foil of Comparative Example 1, a lithium-lithium battery was manufactured in the same manner.

For the lithium-lithium batteries manufactured using the lithium foils of Example 1 and Comparative Example 1, the cycle was performed after setting the charging and discharging rates to 1 mA/cm$^2$, respectively.

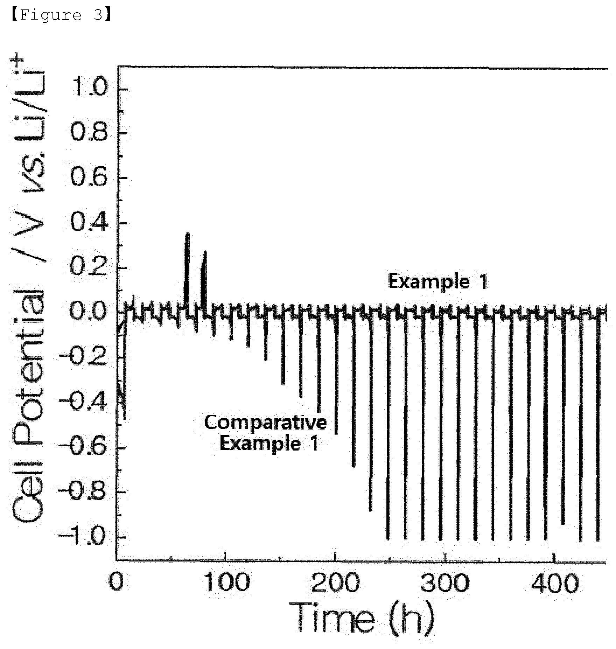

FIG. 3 is a graph showing the results of measuring the lifetime performance of the lithium-lithium batteries manufactured using the lithium foils in Example 1 and Comparative Example 1, respectively.

Table 2 below shows the lithium efficiency ($\eta$) calculated by Equation 1 below using the measurement results of life performance of the lithium-lithium battery:

<Equation 1>

$$\eta(\%) = \left[1 - \frac{Q_1 - Q_S}{n \times Q_S}\right] \times 100$$

wherein, $Q_1$ is the total capacity (mAh) of lithium foil, $Q_S$ is the capacity (mAh) used during charging/discharging, and n is the number of cycles.

Table 2:

| | Li efficiency |
|---|---|
| Comparative Example 1 | 97.82 % |
| Example 1 | 99.56 % |

As shown in FIG. 3 and Table 2, it was confirmed that the lithium-lithium battery comprising the lithium foil containing $LiNO_3$ of Example 1 has a smaller overvoltage, stable lifetime performance, and good lithium efficiency as compared to Comparative Example 1.

**2-2. Evaluation of lifetime performance in lithium-sulfur secondary battery**

For the lithium-sulfur secondary batteries manufactured in Example 1 and Comparative Example 1, respectively, 120 cycles were performed after setting the charging and discharging rates to 0.24 A/g and 0.36 A/g, respectively.

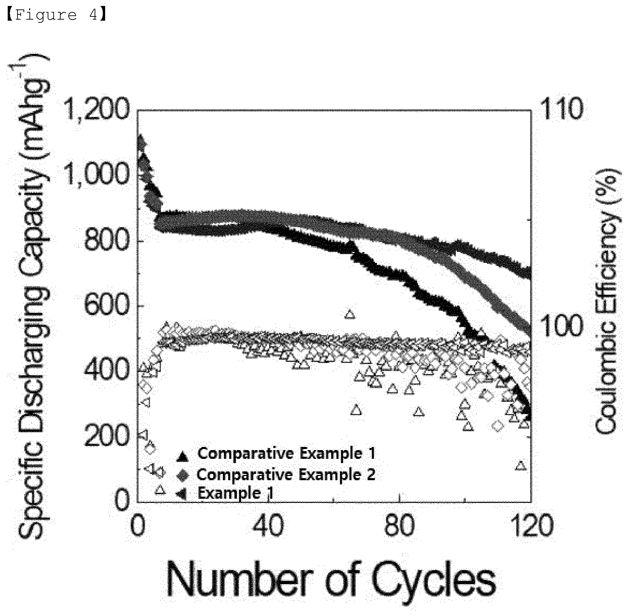

FIG. 4 is a graph showing the results of measuring the lifetime performance of the lithium-sulfur secondary batteries manufactured using lithium foils in Example 1, Comparative Example 1, and Comparative Example 2, respectively.

Table 3 below shows the capacity retention at 120 cycles (Capacity retention @ 120) as experimental results of measuring lifetime performance of the lithium-sulfur batteries.

Table 3:

|                        | Capacity retention @ 120 |
| ---------------------- | ------------------------ |
| Comparative Example 1  | 28.9 %                   |
| Comparative Example 2  | 61 %                     |
| Example 1              | 84 %                     |

As shown in FIG. 4 and Table 3, it was confirmed that the lithium-sulfur secondary battery containing lithium foil containing $LiNO_3$ of Example 1 has better lifetime performance as compared to Comparative Example 1 and Comparative Example 2.

In the above, although the present disclosure has been described by way of limited embodiments and drawings, the present disclosure is not limited thereto, and it is apparent to those skilled in the art that various modifications and variations can be made within the equivalent scope of the present disclosure and the claims to be described below.

**Claims**

1.    A negative electrode for a lithium secondary battery, comprising:

    a lithium substrate; and
    a lithium compound formed on a surface and inside of the lithium substrate;
    wherein the lithium compound comprises at least one selected from the group consisting of $LiNO_3$, LiF, LiCl, $Li_2S$, $Li_2CO_3$, and $Li_2O$; and
    the lithium compound is contained in an amount exceeding 0% by weight and 30% by weight or less based on the total weight of the lithium substrate.

2.    The negative electrode for the lithium secondary battery according to claim 1, wherein the lithium substrate is a lithium foil.

3.    The negative electrode for the lithium secondary battery according to claim 1, wherein the lithium substrate has a thickness of 5 to 500 $\mu$m.

4.    A method for manufacturing a negative electrode for a lithium secondary battery in accordance with claim 1, comprising the steps of:

    (S1) preparing a lithium ingot by adding a lithium compound to molten lithium; and
    (S2) rolling the lithium ingot to produce a lithium substrate containing the lithium compound formed on a surface and inside thereof.

5.    The method for manufacturing the negative electrode for the lithium secondary battery according to claim 4, wherein the lithium compound is a powder of a lithium compound.

6.    A lithium secondary battery, comprising:

    a positive electrode;
    the negative electrode of claim 1;
    a separator; and

an electrolyte solution.

7. The lithium secondary battery according to claim 6, wherein the positive electrode comprises sulfur.

8. The lithium secondary battery according to claim 6, wherein the lithium secondary battery is a lithium-sulfur secondary battery.


**Patentansprüche**

1. Negative Elektrode für eine Lithium-Sekundärbatterie, umfassend:

   ein Lithiumsubstrat; und
   eine Lithiumverbindung, die auf einer Oberfläche und innerhalb des Lithiumsubstrats gebildet ist;
   wobei die Lithiumverbindung mindestens eine umfasst, die aus der Gruppe ausgewählt ist, die aus $LiNO_3$, LiF, LiCl, $Li_2S$, $Li_2CO_3$ und $Li_2O$ besteht; und
   die Lithiumverbindung in einer Menge enthalten ist, die 0 Gew.-% übersteigt und 30 Gew.-% oder weniger ist, bezogen auf das Gesamtgewicht des Lithiumsubstrats.

2. Negative Elektrode für die Lithium-Sekundärbatterie nach Anspruch 1, wobei das Lithiumsubstrat eine Lithiumfolie ist.

3. Negative Elektrode für die Lithium-Sekundärbatterie nach Anspruch 1, wobei das Lithiumsubstrat eine Dicke von 5 bis 500 $\mu$m aufweist.

4. Verfahren zur Herstellung einer negativen Elektrode für eine Lithium-Sekundärbatterie nach Anspruch 1, umfassend die Schritte:

   (S1) Herstellen eines Lithiumbarrens durch Zugeben einer Lithiumverbindung zu geschmolzenem Lithium; und
   (S2) Walzen des Lithiumbarrens, um ein Lithiumsubstrat herzustellen, das die auf einer Oberfläche und innerhalb davon gebildete Lithiumverbindung enthält.

5. Verfahren zur Herstellung der negativen Elektrode für die Lithium-Sekundärbatterie nach Anspruch 4, wobei die Lithiumverbindung ein Pulver einer Lithiumverbindung ist.

6. Lithium-Sekundärbatterie, umfassend:

   eine positive Elektrode;
   die negative Elektrode nach Anspruch 1;
   einen Separator; und
   eine Elektrolytlösung.

7. Lithium-Sekundärbatterie nach Anspruch 6, wobei die positive Elektrode Schwefel umfasst.

8. Lithium-Sekundärbatterie nach Anspruch 6, wobei die Lithium-Sekundärbatterie eine Lithium-Schwefel-Sekundärbatterie ist.


**Revendications**

1. Électrode négative pour une batterie rechargeable au lithium, comprenant :

   un substrat de lithium ; et
   un composé de lithium formé sur une surface et à l'intérieur du substrat de lithium ;
   dans laquelle le composé de lithium comprend un ou plusieurs éléments sélectionnés dans le groupe constitué de $LiNO_3$, LiF, LiCl, $Li_2S$, $Li_2CO_3$ et $Li_2O$ ; et
   le composé de lithium est contenu dans une quantité supérieure à 0 % en poids et égale ou inférieure à 30 % en poids sur la base du poids total du substrat de lithium.

**2.** Électrode négative pour une batterie rechargeable au lithium selon la revendication 1, dans laquelle le substrat de lithium est une feuille de lithium.

**3.** Électrode négative pour une batterie rechargeable au lithium selon la revendication 1, dans laquelle le substrat de lithium a une épaisseur de 5 à 500 μm.

**4.** Procédé de fabrication d'une électrode négative pour une batterie rechargeable au lithium selon la revendication 1, comprenant les étapes consistant à :

(S1) préparer un lingot de lithium en ajoutant un composé de lithium à du lithium fondu ; et
(S2) laminer le lingot de lithium pour produire un substrat de lithium contenant le composé de lithium formé sur une surface et à l'intérieur de celui-ci.

**5.** Procédé de fabrication d'une électrode négative pour une batterie rechargeable au lithium selon la revendication 4, dans lequel le composé de lithium est une poudre d'un composé de lithium.

**6.** Batterie rechargeable au lithium, comprenant :

une électrode positive ;
l'électrode négative selon la revendication 1 ;
un séparateur ; et
une solution d'électrolyte.

**7.** Batterie rechargeable au lithium selon la revendication 6, dans laquelle l'électrode positive comprend du soufre.

**8.** Batterie rechargeable au lithium selon la revendication 6, dans laquelle la batterie rechargeable au lithium est une batterie rechargeable au lithium-soufre.

【Figure 1】

【Figure 2】

Electron Image 5

25μm

| Map Sum Spectrum | | |
|---|---|---|
| | Wt% | σ |
| O | 78.1 | 0.9 |
| C | 12.7 | 0.6 |
| N | 6.6 | 0.9 |
| Al | 1.6 | 0.3 |
| Si | 1.0 | 0.2 |
| Cu | 0.0 | 1.6 |
| Zn | 0.0 | 1.1 |

Powered by Tru-Q®

C K series                              N K series

25μm                                    25μm

O K series                              Si K series

25μm                                    25μm

【Figure 3】

【Figure 4】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20210160928
- KR 20200132491